# EUROPÄISCHE PATENTSCHRIFT

(11) **EP 1 603 768 B1**
(45) Veröffentlichungstag und Bekanntmachung des Hinweises auf die Patenterteilung: **07.05.2008**
(21) Anmeldenummer: 04717602.9
(22) Anmeldetag: 05.03.2004
(51) Int. Cl.: B60L 11/12

(54) **HYBRIDANTRIEBSSYSTEM UND VERFAHREN ZUR REGELUNG EINES HYBRIDANTRIEBSSYSTEMS**
HYBRID DRIVING SYSTEM AND A METHOD FOR ADJUSTING SAID HYBRID DRIVING SYSTEM
SYSTEME D'ENTRAINEMENT HYBRIDE ET PROCEDE POUR REGLER UN SYSTEME D'ENTRAINEMENT HYBRIDE

(30) Priorität: 11.03.2003 DE 10310574
(43) Veröffentlichungstag der Anmeldung: 14.12.2005
(73) Patentinhaber: SIEMENS AKTIENGESELLSCHAFT, 80333 München (DE)
(72) Erfinder: HOLL, Eugen, 90579 Langenzenn (DE); RUPPERT, Swen, 91096 Möhrendorf (DE)
(86) Internationale Anmeldenummer: PCT/EP2004/002293
(87) Internationale Veröffentlichungsnummer: WO 2004/080747

(56) Entgegenhaltungen:
- EP-A- 0 543 203
- EP-A- 1 186 497
- WO-A-01/74699
- DE-A- 10 137 908
- DE-C- 19 624 090
- PATENT ABSTRACTS OF JAPAN Bd. 2000, Nr. 22, 9. März 2001 (2001-03-09) & JP 2001 145208 A (TOSHIBA CORP), 25. Mai 2001 (2001-05-25)

## Beschreibung

Die Erfindung betrifft ein Hybridantriebssystem für ein Fahrzeug mit einem mit einem Verbrennungsmotor gekoppelten Generator, der über einen Generatorumrichter, einen Spannungszwischenkreis und einen Motorumrichter mit einem elektrischen Antriebsmotor in Verbindung steht, wobei mit dem Spannungszwischenkreis ein Energiespeicher verbunden ist.

Die Erfindung betrifft auch ein Verfahren zur Regelung eines solchen Hybridantriebssystems.

Ein solches System, sowie ein solches Verfahren sind aus der DE 101 37 908 A1 bekannt.

Ein Hybridantriebssystem wird sowohl für Straßenfahrzeuge als auch für Schienenfahrzeuge eingesetzt. Als Energiespeicher können eine Batterie oder ein Hochleistungskondensator dienen.

Bedingt durch eine relativ kleine Energiedichte sinkt bei einem Kondensator die Leerlaufspannung relativ schnell mit der Entladung. Bei einer Batterie hängt die Leerlaufspannung von verschiedenen Faktoren, wie Entladezustand, Vorgeschichte und Temperatur, ab. Bei einem Kondensator oder bei einer Batterie wird die Klemmenspannung des Energiespeichers zusätzlich zur Leerlaufspannung auch noch vom belastungsabhängigen Spannungsabfall am eigenen Innenwiderstand bestimmt. Das führt dann zu einer niedrigen Zwischenkreisspannung, was sich negativ auf den Betrieb des Antriebsmotors und des Generators auswirkt.

Es ist bereits bekannt, diesem Nachteil der niedrigen Spannung entgegenzuwirken, indem ein hoher Stromfluss erzeugt wird, was aber schwere überdimensionale Bauteile erfordert. Es ist auch schon bekannt, einen Energiespeicher über einen Hoch/Tiefsetzsteller an den Zwischenkreis anzuschließen. Dazu ist aber eine aufwändige teuere Elektronik erforderlich. Schließlich ist aus der deutschen Patentanmeldung 101 37 908 bekannt, dass der Energiespeicher mit dem Zwischenkreis über einen Schalter verbunden sein kann. Der Energiespeicher kann dann, wenn er nicht benötigt wird, vom übrigen System abgetrennt werden, so dass sich die niedrige Spannung am Energiespeicher nicht nachteilig auf den Antrieb auswirken kann.

Es wird dabei jedoch in Kauf genommen, dass nach der Abtrennung des Energiespeichers keine Leistung mehr aus dem Speicher entnommen werden kann. Insbesondere, falls der Speicher ein Hochleistungskondensator ist, kann seine Kapazität dann nicht vollständig genutzt werden. Das führt letztlich dazu, dass Verbrennungsmotor und Generator größer dimensioniert werden müssen.

Der Erfindung liegt die Aufgabe zugrunde, ein Hybridantriebssystem und ein Verfahren zur Regelung des Hybridantriebssystems anzugeben, die weder eine Überdimensionierung von Bauteilen, noch zusätzliche elektronische Komponenten erfordern und trotzdem die im Energiespeicher gespeicherte Energie vollständig nutzen können.

Die Aufgabe, ein geeignetes Hybridantriebssystem anzugeben, wird gemäß der Erfindung durch ein Hybridantriebesystem gemäß Anspruch 1 und das entsprechende Verfahren nach Anspruch 4 gelöst.

Zum Betrieb der Umrichter ist eine Mindestzwischenkreisspannung erforderlich, die von der Drehzahl und vom Strom der Antriebsmotoren oder des Generators abhängt.

Durch Trennung des Spannungszwischenkreises in Teilzwischenkreise wird der Vorteil erzielt, dass die beiden Teilzwischenkreise bei unterschiedlichem Spannungsniveau betrieben werden können. Wenn der erste Schalter zwischen den beiden Teilzwischenkreisen diese voneinander trennt, ist der Energiespeicher nämlich nur mit einem der beiden Teilzwischenkreise verbunden und die Antriebsmotoren am anderen Teilzwischenkreis können unabhängig von der am Energiespeicher anliegenden Spannung arbeiten. Nur die Antriebsmotoren, die am Teilzwischenkreis, der mit dem Energiespeicher in Verbindung steht, angeschlossen sind, arbeiten mit verminderter Leistung. Das stört jedoch nicht, da die anderen Antriebsmotoren diese Leistungsminderung ausgleichen können.

Ist ein Betrieb an einem gemeinsamen nicht geteilten Zwischenkreis möglich, was gegeben ist, wenn die Spannung am Energiespeicher, wie z.B. beim Bremsen, über der Mindestzwischenkreisspannung liegt, sollten die beiden Teilzwischenkreise sinnvollerweise über den ersten Schalter miteinander verbunden sein. Dazu müssen zunächst die Spannungen in beiden Teilzwischenkreisen durch eine geschickte Spannungsregelung angeglichen werden.

Es wird der Vorteil erzielt, dass sich eine niedrige Spannung am Energiespeicher nicht nachteilig auf das Antriebssystem auswirken kann.

Der erste Schalter ist beispielsweise ein Halbleiterschalter. Er enthält zum Beispiel eine inverse Diode. Er kann im Umrichter integriert sein. Dadurch erzielt man einen Kostenvorteil.

Beispielsweise ist der Energiespeicher mit dem Spannungszwischenkreis direkt oder über einen zweiten Schalter verbunden.

Die Aufgabe, ein geeignetes Verfahren zur Regelung des Hybridantriebssystems anzugeben, wird gemäß der Erfindung dadurch gelöst, dass, wenn die Spannung am Energiespeicher niedriger als die zumindest erforderliche Zwischenkreisspannung ist, der erste Schalter zwischen den beiden Teilzwischenkreisen die Verbindung unterbricht und dass der erste Schalter sonst durchlässig ist.

Es wird der Vorteil erzielt, dass sich eine zeitweise niedrige Spannung am Energiespeicher nur auf eines der beiden Antriebsmotorsysteme auswirken kann. Gegenüber einer festen Kopplung der beiden Teilzwischenkreise ergibt sich der Vorteil einer höheren Leistung des Gesamtsystems. Wann der erste Schalter geschlossen und wann er geöffnet ist, hängt prinzipiell von der Dimensionierung des Gesamtsystems und der Verwendung der Komponenten des Gesamtsystems ab. Der Zeitpunkt, ab dem die Teilzwischenkreise durch den ersten Schalter getrennt werden, wird durch die Spannung am Energiespeicher bestimmt.

Sinkt die Spannung am Energiespeicher derart ab, dass die Antriebsmotoren oder der Generator aufgrund der geringeren Spannung nicht mehr ihre Nennleistung abgeben können, werden die beiden Teilzwischenkreise getrennt.

Um die Trennung vorzunehmen, wird folgendes Verfahren angewendet: Es wird die momentane Leistung des Diesel-Generator-Sets voll in die Antriebsmotoren eingespeist, die dem gleichen Teilzwischenkreis zugeordnet sind. Die Leistung der Antriebsmotoren des anderen Teilzwischenkreises wird derart gewählt, dass sich für das Gesamtsystem keine Leistungsänderung ergibt. Damit wird erreicht, dass über den ersten Schalter nahezu kein Strom fließt.

Es wird der Vorteil erzielt, dass die Umschaltung ohne Einfluss auf den Arbeitspunkt des Dieselmotors und dem daran angeschlossenen Generator sowie unter Beibehaltung der Systemleistung des Gesamtsystems durchgeführt wird.

Sind die beiden Teilzwischenkreise getrennt, wird das Spannungsniveau im mit dem Generatorumrichter verbundenen Teilzwischenkreis soweit angehoben, dass dieses Teilsystem im optimalen Arbeitspunkt arbeitet. Der geforderte Leistungsaufbau wird jetzt über die Erhöhung der Leistung in diesem Teilsystem durchgeführt, um die Gesamttraktionsleistung bis an das Maximum zu führen. Je nach Systemkonfiguration kann dies nach unterschiedlichen Algorithmen efolgen.

Erhöht sich die Spannung am Energiespeicher wieder, so dass mit dieser Spannung das Gesamtsystem an einem gemeinsamen Zwischenkreis betrieben werden könnte, werden die beiden Teilzwischenkreise über den ersten Schalter wieder zusammengeschaltet. Bevor der erste Schalter zwischen den beiden Teilzwischenkreisen wieder durchlässig geschaltet wird, werden die Spannungen an den beiden Teilzwischenkreisen angeglichen, damit keine zu großen Ausgleichsströme fließen.

Beispielsweise werden, bevor mit dem ersten Schalter die Verbindung getrennt wird, die Leistungen der Antriebsmotoren derart geregelt, dass der Schalter nahezu stromlos wird.

Bevor der erste Schalter durchlässig geschaltet wird, werden beispielsweise die Spannungen an den beiden Teilzwischenkreisen angeglichen.

Zur Angleichung der Spannungen wird z.B. die Spannung im ersten Teilzwischenkreis, der mit dem Generatorumrichter verbunden ist, mit einem Spannungsregler heruntergeregelt.

Nach einem anderen Beispiel wird zur Angleichung der Spannungen die Spannung im zweiten Teilzwischenkreis, der mit dem Energiespeicher verbunden ist, durch Entlasten mindestens eines Antriebsmotors, dessen zugehöriger Motorumrichter an diesem zweiten Teilzwischenkreis angeschlossen ist, erhöht.

Beispielsweise wird die Spannung am zweiten Teilzwischenkreis, der mit dem Energiespeicher verbunden ist, erhöht, indem mindestens ein Antriebsmotor, dessen zugehöriger Motorumrichter an diesem zweiten Teilzwischenkreis angeschlossen ist, geringfügig abgebremst wird, wodurch im generatorischen Betrieb elektrische Energie erzeugt wird.

Dieses Verfahren wird insbesondere dann angewendet, wenn, wie in der DE 101 37 908 A1 beschrieben, der Energiespeicher über den zweiten Schalter vom Zwischenkreis getrennt werden soll und die Antriebsmotoren rein aus dem Verbrennungsmotor ihre Leistung beziehen sollen (dieselelektrischer Betrieb). Sind in diesem Fall die zwei Teilzwischenkreise vorher getrennt gewesen, und soll dann der Energiespeicher noch zusätzlich abgetrennt werden, müssen die beiden Teilzwischenkreise sofort nach Abtrennung des Energiespeichers wieder zusammengeschlossen werden. Um zuvor die Spannungen der Teilzwischenkreise einander anzupassen, wird die Spannung U2 am Teilzwischenkreis, der dem Energiespeicher zugeordnet ist (zweiter Teilzwischenkreis) der Spannung U1 am Teilzwischenkreis, der mit dem Generatorumrichter verbunden ist (erster Teilzwischenkreis) angepasst. Dies kann bei offenen Schaltern nur durch Aufnahme von Bremsenergie durch die Antriebsmotoren im zweiten Teilzwischenkreis geschehen. Hierzu wird vorteilhafterweise durch einen überlagerten Spannungsregler ein geringes Bremsmoment, welches sich nicht störend auf das Fahrverhalten auswirkt, in die Fahrmotoren des zweiten Teilzwischenkreises eingeprägt und die Spannung U2 wird auf den Wert der Spannung U1 geregelt. Wenn beide Spannungen ungefähr gleich sind, kann der erste Schalter geschlossen werden.

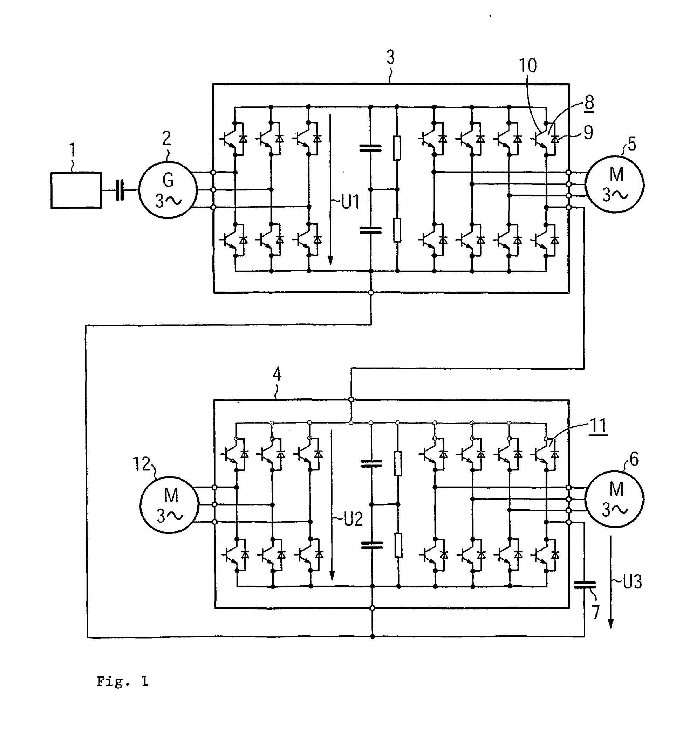

Ein Ausführungsbeispiel für ein Hybridantriebssystem und ein Verfahren zur Regelung eines solchen Hybridantriebssystems nach der Erfindung wird anhand der Zeichnung näher erläutert.

Die Zeichnung zeigt ein Hybridantriebssystem mit zwei Teilzwischenkreisen und zwei Antriebsmotoren:

Das Hybridantriebssystem nach der Zeichnung besteht aus einem Verbrennungsmotor 1, insbesondere einem Dieselmotor, einem Generator 2, zwei Teilzwischenkreisen 3 und 4, zwei Antriebsmotoren 5 und 6 und einem Energiespeicher 7, der im gezeigten Beispiel ein Kondensator ist. Der erste Teilzwischenkreis 3 ist über einen ersten Schalter 8 mit dem zweiten Teilzwischenkreis 4 verbunden. Der erste Schalter 8 besteht aus einer Diode 9 mit Durchlassrichtung zum ersten Teilzwischenkreis 3 hin und einem parallel zur Diode 9 angeordneten leitend und sperrend schaltbaren Transistor 10 mit Durchlassrichtung zum zweiten Teilzwischenkreis 4 hin. Zur Regelung der Spannung U1 am ersten Teilzwischenkreis 3 ist ein nicht gezeigter Spannungsregler vorhanden. Auch zur Regelung der Spannung U2 am zweiten Teilzwischenkreis 4 ist ein nicht gezeigter Spannungsregler vorhanden.

Der zweite Teilzwischenkreis 4 und der mit ihm verbundene Antriebsmotor 6 werden von der Spannung am Energiespeicher 7 beeinflusst. Zwischen dem Energiespeicher 7 und dem zweiten Teilzwischenkreis 4 befindet sich ein zweiter Schalter 11. Wenn dieser zweite Schalter 11 geschlossen ist, können der erste Teilzwischenkreis 3 und der mit ihm verbundene zusätzliche Antriebsmotor 5 durch Öffnen des ersten Schalters 8 von der am zweiten Teilzwischenkreis 4 anliegenden Energiespeicherspannung U3 getrennt werden.

Beim Entladen des Energiespeichers 7 kann über die Diode 9 ein Strom zum ersten Teilzwischenkreis 3 und damit zum zusätzlichen Antriebsmotor 5 fließen. Damit sich eine Spannung am Energiespeicher 7, die niedriger als die Mindestzwischenkreisspannung ist, nicht negativ auswirkt, wird der Transistor 10 geöffnet und das Spannungsniveau am ersten Teilzwischenkreis 3 wird über einen nicht dargestellten Spannungsregler erhöht. Die Diode 9 geht dann in Sperrung, so dass der erste Teilzwischenkreis 3 elektrisch vom zweiten Teilzwischenkreis 4 getrennt ist. Die beiden Teilzwischenkreise 3 und 4 können dann bei unterschiedlichen Spannungsniveaus betrieben werden, so dass sich die Spannung U3 am Energiespeicher 7 nur auf den zweiten Teilzwischenkreis 4 und nicht auf den ersten Teilzwischenkreis 3 auswirken kann. Ein möglicher Leistungsverlust des Antriebsmotors 6 wird dann durch eine zusätzliche Leistung des zusätzlichen Antriebsmotors 5 ausgeglichen.

Wenn das Fahrzeug abgebremst werden soll und die kinetische Energie durch den generatorischen Betrieb der Antriebsmotoren 5 und 6 in elektrische Energie umgewandelt werden soll, wird die Spannung U1 im ersten Teilzwischenkreis 3 kurzzeitig auf die Spannung U2 im zweiten Teilzwischenkreis 4 erniedrigt und der Transistor 10 des ersten Schalters 8 wird leitend geschaltet. Dann kann auch vom zusätzlichen Antriebsmotor 5 ausgehende elektrische Energie im Energiespeicher 7 abgespeichert werden.

Dadurch, dass der Energiespeicher 7 nur vom ersten Teilzwischenkreis 3 und nicht vom zweiten Teilzwischenkreis 4 abgetrennt wird, wird vorteilhafterweise eine Restladung des Energiespeichers 7 während des Fahrbetriebes nicht im Energiespeicher 7 belassen. Der Betrieb des Fahrzeuges ist folglich energetisch günstiger als bei Einsatz eines bisher bekannten Hybridantriebssystems.

Nur beispielsweise kann der Energiespeicher 7 zusätzlich vom zweiten Teilzwischenkreis 4 über den zweiten Schalter 11 abgetrennt werden, der in seiner Funktion dem ersten Schalter 8 entspricht. Der zweite Schalter 11 wird dann geöffnet, wenn alle Verbraucher ausschließlich über den Verbrennungsmotor 1 gespeist werden (dieselelektrischer Betrieb).

Beispielsweise kann dem zweiten Teilzwischenkreis 4 ein Hilfs-Antriebsmotor 12 zugeordnet sein, der den Antriebsmotor 6 unterstützt.

Es wird mit dem Hybridantriebssystem und dem Regelungsverfahren der Vorteil erzielt, dass im Fahrbetrieb die im Energiespeicher 7 gespeicherte Restenergie vollständig eingesetzt werden kann und dass trotzdem der Antrieb, insbesondere der zusätzliche Antriebsmotor 5 in seiner Leistung durch die niedrige Spannung am Energiespeicher 7 nicht beeinträchtigt werden kann. Die fehlende Leistung des Antriebsmotors 6 wird im Fahrbetrieb durch eine zusätzliche Leistung des zusätzlichen Antriebsmotors 5 kompensiert.

## Patentansprüche

1. Hybridantriebssystem für ein Fahrzeug mit zwei Teilsystemen, deren Teilzwischenkreise (3,4) mittels eines ersten Schalters (8) elektrisch parallel schaltbar sind, wobei ein Energiespeicher (7) mittels eines zweiten Schalters (11) elektrisch parallel zu einem der beiden Teilzwischenkreise (3) schaltbar ist, wobei ein mit einem Verbrennungsmotor (1) gekoppelter Generator (2) mittels eines Generatorumrichters mit dem anderen der beiden Teilzwischenkreise (3, 4) verbunden ist, und wobei jeweils ein Antriebsmotor (5,6,12) mittels eines Motorumrichters mit einem der beiden Teilzwischenkreise (3,4) verknüpft ist.

2. Hybridantriebssystem nach Anspruch 1, **dadurch gekennzeichnet, dass** der erste Schalter (8) ein Transistor (10) ist, dem eine Diode (9) elektrisch antiparallel geschaltet ist.

3. Hybridantriebssystem nach Anspruch 1, **dadurch gekennzeichnet, dass** der zweite Schalter (11) ein Transistor ist, dem eine Diode elektrisch antiparallel geschaltet ist.

4. Verfahren zur Regelung des Hybridantriebssystems nach einem der vorgenannten Ansprüche, **dadurch gekennzeichnet, dass**, wenn die Spannung (U3) am Energiespeicher (7) niedriger als die zumindest erforderliche Zwischenkreisspannung ist, der erste Schalter (8) zwischen den beiden Teilzwischenkreisen (3, 4) die Verbindung unterbricht und dass der erste Schalter (8) sonst durchlässig ist.

5. Verfahren nach Anspruch 4, **dadurch gekennzeichnet, dass**, bevor mit dem ersten Schalter (8) die Verbindung getrennt wird, die Leistungen der Antriebsmotoren (5, 6, 12) derart geregelt werden, dass der erste Schalter (8) nahezu stromlos wird.

6. Verfahren nach einem der Ansprüche 4 oder 5, **dadurch gekennzeichnet, dass**, bevor der erste Schalter (8) durchlässig geschaltet wird, die Spannungen an den beiden Teilzwischenkreisen (3, 4) angeglichen werden.

7. Verfahren nach Anspruch 6, **dadurch gekennzeichnet, dass** zur Angleichung der Spannungen die Spannung (U1) im ersten Teilzwischenkreis (3), der mit dem Generatorumrichter verbunden ist, mit einem Spannungsregler heruntergeregelt wird.

8. Verfahren nach einem der Ansprüche 6 oder 7, **dadurch gekennzeichnet, dass** zur Angleichung der Spannungen, die Spannung (U2) im zweiten Teilzwischenkreis (4), der mit dem Energiespeicher (7) verbunden ist, durch Entlasten mindestens eines Antriebsmotors (6, 12), dessen zugehöriger Motorumrichter an diesem zweiten Teilzwischenkreis (4) angeschlossen sind, erhöht wird.

9. Verfahren nach Anspruch 8, **dadurch gekennzeichnet, dass** die Spannung (U2) im zweiten Teilzwischenkreis (4), der mit dem Energiespeicher (7) verbunden ist, erhöht wird, indem mindestens ein Antriebsmotor (6, 12), dessen zugehöriger Motorumrichter an diesen Teilzwischenkreis (4) angeschlossen ist, geringfügig abgebremst wird, wodurch im generatorischen Betrieb elektrische Energie erzeugt wird.

## Claims

1. Hybrid drive system for a vehicle having two subsystems, whose intermediate circuit elements (3, 4) can be connected electrically in parallel by means of a first switch (8), in which case an energy store (7) can be connected electrically in parallel with one of the two intermediate circuit elements (3) by means of a second switch (11), with a generator (2), which is coupled to an internal combustion engine (1), being connected to the other of the two intermediate circuit elements (3, 4) by means of a generator converter, and with in each case one drive motor (5, 6, 12) being connected to one of the two intermediate circuit elements (3, 4) by means of a motor converter.

2. Hybrid drive system according to Claim 1, **characterized in that** the first switch (8) is a transistor (10), with a diode (9) connected electrically back-to-back in parallel.

3. Hybrid drive system according to Claim 1, **characterized in that** the second switch (11) is a transistor, with a diode connected electrically back-to-back in parallel.

4. Method for controlling the hybrid drive system according to one of the preceding claims, **characterized in that**, when the voltage (U3) on the energy store (7) is lower than the at least required intermediate-circuit voltage, the first switch (8) between the two intermediate circuit elements (3, 4) interrupts the connection, and **in that** the first switch (8) is otherwise switched on.

5. Method according to Claim 4, **characterized in that**, before the first switch (8) disconnects the connection, the power levels of the drive motors (5, 6, 12) are controlled such that there is virtually no current flowing through the first switch (8).

6. Method according to one of Claims 4 or 5, **characterized in that**, before the first switch (8) is switched on, the voltages in the two intermediate circuit elements (3, 4) are matched.

7. Method according to Claim 6, **characterized in that**, in order to match the voltages, the voltage (U1) in the first intermediate circuit element (3), which is connected to the generator converter, is regulated down by means of a voltage regulator.

8. Method according to one of Claims 6 or 7, **characterized in that**, in order to match the voltages, the voltage (U2) in the second intermediate circuit element (4), which is connected to the energy store (7), is increased by reducing the load on at least one drive motor (6, 12), whose associated motor converter is connected to this second intermediate circuit element (4).

9. Method according to Claim 8, **characterized in that** the voltage (U2) in the second intermediate circuit element (4), which is connected to the energy store (7), is increased by slightly braking at least one drive motor (6, 12) whose associated motor converter is connected to this intermediate circuit element (4), as a result of which electrical power is produced in the generator mode.

## Revendications

1. Système d'entraînement hybride pour un véhicule avec deux sous-systèmes dont les circuits intermédiaires partiels (3, 4) sont commutables électriquement en parallèle au moyen d'un premier interrupteur (8), un accumulateur d'énergie (7) étant commutable électriquement en parallèle avec l'un des deux circuits intermédiaires partiels (3) au moyen d'un deuxième interrupteur (11), un générateur (2) couplé à un moteur thermique (1) étant relié au moyen d'un convertisseur de générateur à l'autre circuit intermédiaire partiel (3, 4) et, à chaque fois, un moteur d'entraînement (5, 6, 12) étant combiné au moyen d'un convertisseur de moteur à l'un des deux circuits intermédiaires partiels (3, 4).

2. Système d'entraînement hybride selon la revendication 1, **caractérisé par le fait que** le premier interrupteur (8) est un transistor (10) avec lequel une diode (9) est branchée électriquement dans un montage antiparallèle.

3. Système d'entraînement hybride selon la revendication 1, **caractérisé par le fait que** le deuxième interrupteur (11) est un transistor avec lequel une diode est branchée électriquement dans un montage antiparallèle.

4. Procédé pour la régulation du système d'entraînement hybride selon l'une des revendications précédentes, **caractérisé par le fait que**, si la tension (U3) à l'accumulateur d'énergie (7) est inférieure à la tension de circuit intermédiaire au moins nécessaire, le premier interrupteur (8) entre les deux circuits intermédiaires partiels (3, 4) interrompt la liaison et que, sinon, le premier interrupteur (8) est passant.

5. Procédé selon la revendication 4, **caractérisé par le fait que**, avant que la liaison soit coupée avec le premier interrupteur (8), les puissances des moteurs d'entraînement (5, 6, 12) sont régulées de telle sorte que le premier interrupteur (8) est presque sans courant.

6. Procédé selon l'une des revendications 4 ou 5,
**caractérisé par le fait que**, avant que le premier interrupteur (8) soit commuté à l'état passant, les tensions aux deux circuits intermédiaires partiels (3, 4) sont égalisées.

7. Procédé selon la revendication 6, **caractérisé par le fait que**, pour l'égalisation des tensions, la tension (U1) dans le premier circuit intermédiaire partiel (3) qui est relié au convertisseur de générateur est régulée vers le bas par un régulateur de tension.

8. Procédé selon l'une des revendications 6 ou 7,
**caractérisé par le fait que**, pour l'égalisation des tensions, la tension (U2) dans le deuxième circuit intermédiaire partiel (4) qui est relié à l'accumulateur d'énergie (7) est augmentée par le déchargement d'au moins un moteur d'entraînement (6, 12) dont le convertisseur de moteur associé est raccordé à ce deuxième circuit intermédiaire partiel (4).

9. Procédé selon la revendication 8, **caractérisé par le fait que** la tension (U2) dans le deuxième circuit intermédiaire partiel (4) qui est relié à l'accumulateur d'énergie (7) est augmentée **par le fait qu'**au moins un moteur d'entraînement (6, 12) dont le convertisseur de moteur associé est raccordé à ce circuit intermédiaire partiel (4) est légèrement freiné, ce qui fait que de l'énergie électrique est produite lors du fonctionnement en générateur.
